# EUROPÄISCHE PATENTSCHRIFT

(11) **EP 0 913 300 B1**
(45) Veröffentlichungstag und Bekanntmachung des Hinweises auf die Patenterteilung: **18.12.2002**
(21) Anmeldenummer: 98120258.3
(22) Anmeldetag: 26.10.1998
(51) Int. Cl.: B60R 22/34, B60R 22/28

(54) **Gurtaufroller**
Belt retractor
Rétracteur de sangle

(30) Priorität: 27.10.1997 DE 19747461
(43) Veröffentlichungstag der Anmeldung: 06.05.1999
(73) Patentinhaber: TAKATA-PETRI (Ulm) GmbH, 89081 Ulm (DE)
(72) Erfinder: Bannert, Georg, 88444 Ummendorf (DE); Husung, Christian, 73560 Böbingen (DE); Wifling, Martin, 89134 Blaustein (DE); Fleischmann, Robert, 89073 Ulm (DE); Hasse, Hermann, 73340 Amstetten (DE); Wengert, Andreas, 73557 Mutlangen (DE); Mayer, Leonard, 89567 Sontheim/Brz. (DE); Lustig, Oswald, 89134 Herrlingen/Blaustein (DE); Kopetzky, Robert, Dr., 89173 Lonsee (DE); Schnabl, Roland, 89077 Ulm (DE); Frank, Richard, 89275 Elchingen (DE); Kempfle, Thomas, 89346 Bibertal (DE)
(74) Vertreter: Müller, Wolfram Hubertus, Dipl.-Phys.

(56) Entgegenhaltungen:
- WO-A-97/06994
- DE-A- 19 653 510
- DE-U- 29 622 181
- PATENT ABSTRACTS OF JAPAN vol. 097, no. 010, 31. Oktober 1997 & JP 09 164911 A (NIPPON SEIKO KK), 24. Juni 1997

## Beschreibung

Die vorliegende Erfindung betrifft einen Gurtaufroller nach dem Oberbegriff des Anspruchs 1.

Ein derartiger Gurtaufroller ist aus der DE 296 22 181 U bekannt.

Derartige Gurtaufroller ermöglichen eine Gurtkraftbegrenzung für den Fahrzeuginsassen im Falle eines Unfalls. Bei einem Unfall verriegelt die Spindel gegenüber dem festen Grundrahmen, so daß ein weiteres Ausziehen des Sicherheitsgurtes bzw. ein weiteres Drehen der Spindel nicht möglich ist. Bei weiterer Ausübung einer Kraft auf das Gurtband wird jedoch das kraftbegrenzende Element aktiviert (ein Torsionsstab wird verdreht), das zwischen der Spindel und dem Grundgestell verriegelt ist, wodurch Energie in mechanische Verformung und Wärme umgewandelt wird.

Aus der DE 196 53 510 A ist ein Gurtkraftbegrenzer bekannt, der einen in einer Gurtaufwickelhülse angeordneten Torsionsstab aufweist. Zwischen der Gurtaufwickelhülse und dem Torsionsstab ist eine Torsionswelle vorgesehen, die eine Veränderung des Kraftniveaus für das Wirksamwerden einer Gurtkraftbegrenzung bewirkt.

Aus der WO 97/06994 A ist ein weiterer Gurtaufroller mit Einrichtungen zur Gurtkraftbegrenzung bekannt.

Es ist die Aufgabe der vorliegenden Erfindung, einen Gurtaufroller der eingangs genannten Art dahingehend weiterzubilden, daß auf einfache Weise ein unterschiedliches Verhalten des Gurtaufrollers eingestellt werden kann.

Die Lösung dieser Aufgabe erfolgt durch die Merkmale des Anspruchs 1.

Erfindungsgemäß wird ein zusätzliches kraftbegrenzendes Element eingesetzt, das mit dem bereits vorhandenen kraftbegrenzenden Element gekoppelt oder von diesem entkoppelt werden kann. Im Falle von schwereren Insassen kann das zusätzliche kraftbegrenzende Element im Falle eines Unfalls zusätzlich angekoppelt werden, wohingegen bei einem leichteren Insassen bzw. bei einem leichteren Unfall eine Entkopplung der beiden Elemente möglich ist. Im Rahmen eines "intelligenten" Energiemanagementsystems in einem Gurtaufroller lässt sich somit die auf den Insassen wirkende Gurtkraft abhängig von der Größe und dem Gewicht des Insassen sowie der Stärke des Unfalls individuell einstellen'. Die Größe und/oder das Gewicht des Insassen können hierzu (unter Umständen bereits vor einem Unfall) detektiert werden, worauf nach Eintreten des Unfalls die beiden Elemente ge- oder entkoppelt werden können, um das gewünschte Kraftverhalten des Gurtbandes zu steuern.

Das weitere kraftbegrenzende Element wird erst dann mit der Spindel gekoppelt, wenn dies erforderlich ist. Das andere Ende des Elementes ist gegenüber dem Grundrahmen ständig verriegelt.

Vorteilhafte Ausführungsformen der Erfindung sind in der Beschreibung, den Zeichnungen und den Unteransprüchen beschrieben.

Nach einer ersten vorteilhaften Ausführungsform kann zum Ineingriffbringen oder zum Verriegeln des weiteren kraftbegrenzenden Elementes eine pyrotechnische Einrichtung vorgesehen sein. Mit einer pyrotechnischen Zündladung kann das zusätzliche kraftbegrenzende Element (vorzugsweise ein Torsionsstab) auf einfache Weise mit dem Gurtaufroller gekoppelt oder von diesem entkoppelt werden, wobei sehr kurze Reaktionszeiten möglich sind.

Nach einer weiteren Ausbildung der Erfindung ist das weitere kraftbegrenzende Element an seinem einen Ende mit einem Zahnrad versehen, das mit einem an der Spindel befestigten Zahnrad kämmt.

Eine konstruktiv besonders günstige Lösung ergibt sich, wenn das weitere kraftbegrenzende Element außerhalb der Spindel angeordnet ist, da in diesem Fall der. üblicherweise noch zur Verfügung stehende Raum günstig genutzt ist.

Besonders vorteilhaft ist es, wenn mehrere weitere kraftbegrenzende Elemente vorgesehen sind, die wahlweise mit der Spindel in Eingriff bringbar sind. Bei dieser Ausführungsform ist eine individuelle Anpassung an unterschiedlichste Insassen sowie Unfallsituationen möglich, so dass die auf den Insassen wirkende Gurtkraft bestmöglich an die jeweilige Situation angepasst werden kann.

Als kraftbegrenzende Elemente können vorzugsweise Torsionsstäbe eingesetzt werden.

Nachfolgend wird die folgende Erfindung rein beispielhaft anhand vorteilhafter Ausführungsformen und unter Bezugnahme auf die beigefügten Zeichnungen beschrieben. Es zeigen:
- Fig. 1: eine perspektivische Ansicht einer ersten Ausführungsform eines Gurtaufrollers;
- Fig. 2: eine perspektivische Seitenansicht einer zweiten Ausführungsform eines Gurtaufrollers;
- Fig. 3: eine perspektivische Rückansicht des Gurtaufrollers von Fig. 2; und
- Fig. 4: eine Seitenansicht des Gurtaufrollers der Fig. 2 und 3.

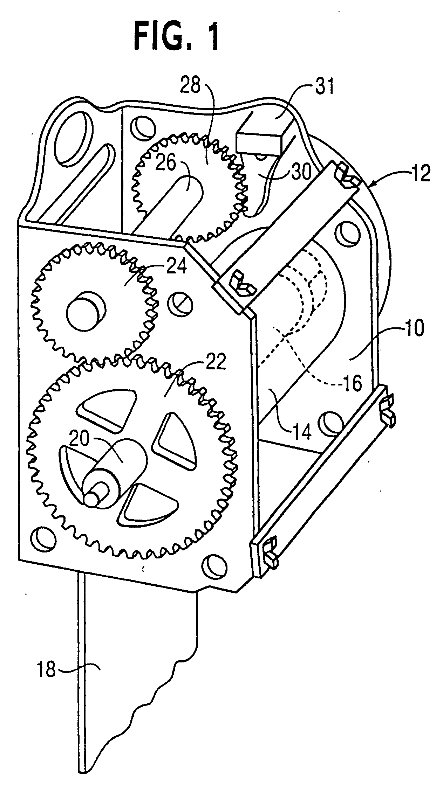

Fig. 1 zeigt eine erste Ausführungsform eines Gurtaufrollers für einen Sicherheitsgurt, der einen festen Grundrahmen 10 aufweist, auf dem eine Spindel 14 drehbar befestigt ist. Die Spindel 14 dient zum Aufrollen eines Sicherheitsgurtes 18 und ist zu diesem Zweck von einer Feder so vorgespannt, daß sich der Sicherheitsgurt automatisch aufrollt.

Die Spindel 14 ist an ihrem (in Fig. 1 rechten) Ende mit einem (nicht im Detail dargestellten) Verriegelungsflansch 12 verbunden, der sich normalerweise zusammen mit der Spindel 14 dreht. Im Falle eines Unfalls oder beim Bremsen bzw. bei einer Kurvenfahrt des Fahrzeugs wird der Verriegelungsflansch 12 gegenüber dem festen Grundrahmen 10 verriegelt, so daß sich die Spindel 14 nicht mehr dreht und der Sicherheitsgurt 18 blockiert ist.

Ein kraftbegrenzendes Element in Form eines Torsionsstabes 16 ist an seinem einen (in Fig. 1 linken) Ende drehfest mit der Spindel 14 und an seinem anderen (in Fig. 1 rechten) Ende drehfest mit dem Verriegelungsflansch 12 verbunden. Somit erfolgt im Falle einer Verriegelung des Verriegelungsflansches 12 gegenüber dem festen Grundrahmen 10 die Kraftübertragung von dem Sicherheitsgurt 18 über die Spindel 14, von dort über den Torsionsstab 16 zu dem Verriegelungsflansch 12 und von dort zu dem festen Grundrahmen 10.

Wie in Fig. 1 ferner gut zu erkennen ist, befindet sich außen an der Welle 20 der Spindel 14 drehfest ein Zahnrad 22, das mit einem weiteren Zahnrad 24 kleineren Durchmessers kämmt, welches wiederum mit einem weiteren kraftbegrenzenden Element in Form eines Torsionsstabes 26 drehfest verbunden ist, der parallel zu dem ersten Torsionsstab 16 jedoch außerhalb der Spindel verläuft. An seinem dem Zahnrad 24 entgegengesetzt liegenden Ende ist der weitere Torsionsstab 26 drehfest mit einem weiteren Zahnrad 28 verbunden, das über eine Sperrklinke 30 mit dem festen Grundrahmen 10 verriegelbar ist. Die Sperrklinke 30 ist über eine (nicht dargestellte) pyrotechnische Einrichtung einsteuerbar und/oder aussteuerbar.

Die Betriebsweise des in Fig. 1 dargestellten Gurtaufrollers ist wie folgt. Im normalen Betrieb, d.h. bei Stillstand oder normaler Fahrt des Fahrzeugs ist der Sicherheitsgurt 18 von der Spindel 14 frei auf- und abrollbar, wobei sich die Spindel 14 zusammen mit dem damit verbundenen Zahnrad 22 um die Welle 20 dreht. Zusammen mit dieser Drehung erfolgt auch eine Drehung des Verriegelungsflansches 12 sowie eine Drehung des weiteren Torsionsstabes 26, der über das Zahnrad 24 und das Zahnrad 22 mit der Spindel 14 gekoppelt ist.

Im Falle eines Unfalls wird der Verriegelungsflansch 12 gegenüber dem festen Grundrahmen 10 verriegelt, so daß sich die Spindel 16 nicht mehr weiter drehen kann. Bei zunehmender Kraft auf den Sicherheitsgurt 18 erfolgt jedoch eine Verdrehung des Torsionsstabes 16, der drehfest zwischen dem Grundrahmen 10 und der Spindel 14 angeordnet ist, so daß sich die Spindel nach einer Torsion des Torsionsstabes 14 weiter dreht. Sofern sich beispielsweise ein besonders schwerer Insasse auf dem mit dem Gurtaufroller versehenen Fahrzeugsitz befindet, kann zu einem bestimmten Zeitpunkt die pyrotechnische Einrichtung gezündet werden, um die Sperrklinke 30 einzusteuern und das Zahnrad 28 zu blockieren. Nunmehr ist auch der weitere Torsionsstab 26 aktiviert, der bei Aufbringen einer Zugkraft auf den Sicherheitsgurt 18 ebenfalls tordiert wird.

Das in dem Fahrzeug vorgesehene Energiemanagementsystem kann je nach Gesamtauslenkung des Sicherheitsgurts 18, sowie abhängig von anderen Parametern ggf. die Sperrklinke 30 des weiteren Torsionsstabes 26 auch wieder aussteuern, um einen gewünschten Kraftverlauf zu bewirken.

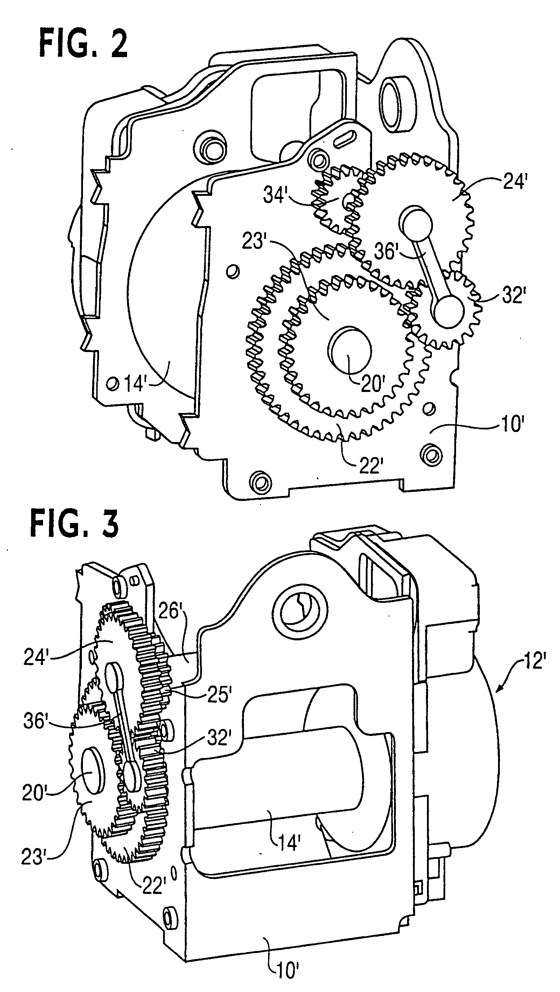

Fig. 2 bis 4 zeigen eine zweite Ausführungsform eines Gurtaufrollers, wobei für gleiche Bauteile gleiche jedoch gestrichene Bezugszeichen verwendet sind.

Der in den Fig. 2 bis 4 dargestellte Gurtaufroller ist in seinem Grundaufbau gleich zu der in Fig. 1 dargestellten Ausführungsform, d.h. auch dieser Gurtaufroller weist einen festen Grundrahmen 10' auf, der eine Spindel 14' zum Aufrollen eines (nicht dargestellten) Sicherheitsgurtes lagert, wobei ein drehbarer Verriegelungsflansch 12' sich zusammen mit der Spindel 14' dreht und gegenüber dem festen Grundrahmen 10' verriegelbar ist. Ein nicht (dargestellter) Torsionsstab ist an seinem Ende drehfest mit der Spindel 14' und an seinem anderen Ende drehfest mit dem Verriegelungsflansch 12' verbunden.

Auch bei dieser Ausführungsform ist ein weiterer Torsionsstab 26' (Fig. 3) außerhalb der Spindel 14' vorgesehen, der im Bedarfsfall zusätzlich zu dem ersten Torsionsstab innerhalb der Spindel zugeschaltet werden kann.

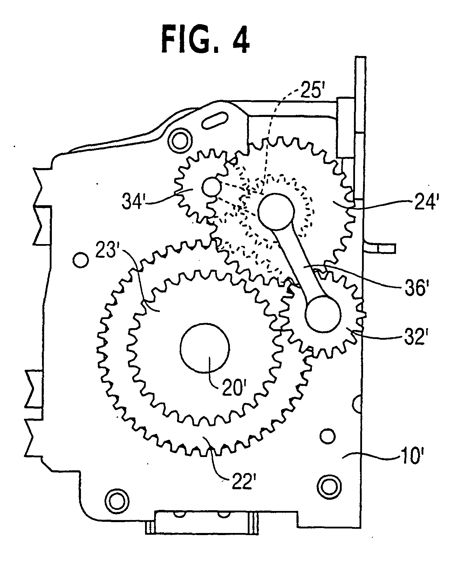

Der weitere Torsionsstab 26' ist an seinem einen (in Fig. 3 rechten) Ende drehfest mit dem Grundrahmen 10' verbunden. Das andere (in Fig. 3 linke) Ende des Torsionsstabes 26' ist über ein schaltbares Getriebe mit der Spindel 14' verbunden. Wie am besten in Fig. 4 zu erkennen ist, ist weitere Torsionsstab 26' drehfest mit einem Zahnrad 25' kleineren Durchmessers sowie einem Zahnrad 24' größeren Durchmessers verbunden, das oberhalb des Zahnrades 25' angeordnet ist. Auf der Welle 20' der Spindel 14' sind drehfest ein Zahnrad 22' größeren Durchmessers sowie ein darüberliegendes Zahnrad 23' kleineren Durchmessers befestigt, wobei die Zahnräder 22' und 23' nicht mit den Zahnrädern 24' und 25' kämmen. Zur Ankopplung des weiteren Torsionsstabes 26' an die Spindel 14' ist ein zweiarmiger Hebel 36' vorgesehen, der um eine Achse schwenkbar ist, die durch den weiteren Torsionsstab 26' verläuft. An einem Ende des geknickt ausgebildeten Hebels 36' ist ein Zahnrad 32' vorgesehen, das mit dem oben liegenden Zahnrad 24' des weiteren Torsionsstabes kämmt. Am anderen Ende des Hebels 36' ist ein Zahnrad 34' vorgesehen, das mit dem Zahnrad 25' kämmt, welches mit dem weiteren Torsionsstab drehfest verbunden ist.

Um den weiteren Torsionsstab 26' an die Spindel 24' ankoppeln zu können, wird der Hebel 36' durch eine (nicht dargestellte) pyrotechnische Einrichtung so ausgelenkt, daß er sich entweder im Uhrzeigersinn oder entgegen dem Uhrzeigersinn dreht. Bei einer Drehung im Uhrzeigersinn (Fig. 4) koppelt das Zahnrad 32', das am Ende des Hebels 36' angeordnet ist, in das Zahnrad 23' der Spindelwelle 20' ein, so daß die Spindelwelle 20' über das Zahnrad 23', das Zahnrad 32' und das Zahnrad 24' mit dem weiteren Torsionsstab 26' gekoppelt ist. Bei einer Drehung entgegen dem Uhrzeigersinn wird der Hebel 36' so verschwenkt, daß das am anderen Ende befestigte Zahnrad 34' in das Zahnrad 22' der Spindelwelle 20' eingreift. Hierbei erfolgt eine Drehkopplung von der Spindel 14' über die Spindelwelle 20', von dort über das Zahnrad 22', das Zahnrad 34' und das Zahnrad 25' zu dem weiteren Torsionsstab 26'. Wie gut zu erkennen ist, wird durch das Verschwenken des Hebels 36' im oder entgegen dem Uhrzeigersinn jeweils ein unterschiedliches Übersetzungsverhältnis zwischen der Spindel 14' und dem weiteren Torsionsstab 26' erzielt.

Es sei darauf hingewiesen, daß neben den dargestellten Ausführungsformen eine Vielzahl von Ankopplungen oder Getrieben möglich ist, um den weiteren Torsionsstab mit dem ersten Torsionsstab bzw. mit der Spindel zu koppeln. Auch können mehrere Torsionsstäbe oder Torsionselemente vorgesehen werden, die wahlweise ein- oder ausgekoppelt werden.

### Bezugszeichenliste

- 10, 10': Grundrahmen
- 12, 12': Verriegelungsflansch
- 14, 14': Spindel
- 16: Torsionsstab
- 18: Sicherheitsgurt
- 20, 20': Welle
- 22, 22': Zahnrad
- 23, 23': Zahnrad
- 24, 24': Zahnrad
- 25: Zahnrad
- 26, 26': weiterer Torsionsstab
- 28: Zahnrad
- 30: Sperrklinke
- 32': Zahnrad
- 34': Zahnrad
- 36': Hebel

## Patentansprüche

1. Gurtaufroller für Sicherheitsgurte, mit
- einer Spindel (14') zum Aufrollen des Sicherheitsgurtes (18), die gegenüber einem festen Grundrahmen (10') verriegelbar ist, und
- einem kraftbegrenzenden Element (16), das zwischen Spindel (14') und Grundrahmen verriegelbar ist, wobei zumindest ein weiteres kraftbegrenzendes Element (26') vorgesehen ist,
**dadurch gekennzeichnet, dass**
das weitere kraftbegrenzende Element (26') mit der Spindel (14') in Eingriff bringbar und gegenüber dem festen Grundrahmen (10') ständig verriegelt ist, und dass zwischen der Spindel (14') und dem weiteren kraftbegrenzenden Element (26') ein Getriebe vorgesehen ist, das schaltbar ist, und das mit dem weiteren kraftbegrenzenden Element (26') drehfest verbunden ist.

2. Gurtaufroller nach Anspruch 1, **dadurch gekennzeichnet, dass** zum Schalten des Getriebes eine pyrotechnische Einrichtung vorgesehen ist.

3. Gurtaufroller nach zumindest einem der vorstehenden Ansprüche, **dadurch gekennzeichnet, dass** das weitere kraftbegrenzende Element (26') außerhalb der Spindel 14') angeordnet ist.

4. Gurtaufroller nach zumindest einem der vorstehenden Ansprüche, **dadurch gekennzeichnet, dass** mehrere weitere kraftbegrenzende Elemente vorgesehen sind, die wahlweise mit der Spindel in Eingriff bringbar sind.

5. Gurtaufroller nach zumindest einem der vorstehenden Ansprüche, **dadurch gekennzeichnet, dass** das Getriebe einen zweiarmigen Hebel (36') aufweist, an dessen Enden jeweils ein Zahnrad (32', 34') angeordnet ist.

6. Gurtaufroller nach zumindest einem der vorstehenden Ansprüche,**dadurch gekennzeichnet, dass** das erste und/oder das weitere kraftbegrenzende Element (16, 26') ein Torsionsstab ist.

## Claims

1. Belt retractor for seat belts, having
- a spindle (14') for retracting the seat belt (18), which spindle can be locked with respect to a fixed base frame (10'), and
- a force-limiting element (16) which can be locked between the spindle (14') and base frame, at least one further force-limiting element (26') being provided,
**characterized in that** the further force-limiting element (26') can be brought into engagement with the spindle (14') and is permanently locked with respect to the fixed baseframe (10'), and **in that** a gear mechanism is provided between the spindle (14') and the further force-limiting element (26'), which gear mechanism can be shifted and which is connected in a rotationally fixed manner to the further force-limiting element (26').

2. Belt retractor according to Claim 1, **characterized in that** a pyrotechnic device is provided for shifting the gear mechanism.

3. Belt retractor according to at least one of the preceding claims, **characterized in that** the further force-limiting element (26') is arranged outside the spindle (14').

4. Belt retractor according to at least one of the preceding claims, **characterized in that** a plurality of further force-limiting elements are provided, which elements can optionally be brought into engagement with the spindle.

5. Belt retractor according to at least one of the preceding claims, **characterized in that** the gear mechanism has a two-armed lever (36') at whose ends a respective gear wheel (32', 34') is arranged.

6. Belt retractor according to at least one of the preceding claims, **characterized in that** the first and/or the further force-limiting element (16, 26') is a torque rod.

## Revendications

1. Enrouleur de ceinture pour ceintures de sécurité, comportant
- une broche (14') pour l'enroulement de la ceinture de sécurité (18) et qui peut être verrouillée par rapport à un cadre de base fixe (10'), et
- un élément de limitation de force (16), qui peut être verrouillé entre la broche (14') et le cadre de base, au moins un autre élément de limitation de force (26') étant prévu,
**caractérisé en ce que**
l'autre élément de limitation de force (26') peut être amené en prise avec la broche (14') et être verrouillé de façon permanente par rapport au cadre de base fixe (10') et qu'entre la broche (14') et l'autre élément de limitation de force (26') il est prévu un mécanisme qui peut être activé et qui est relié solidairement en rotation à l'autre élément de limitation de force (26').

2. Enrouleur de ceinture selon la revendication 1, **caractérisé en ce que** pour l'activation du mécanisme il est prévu un dispositif pyrotechnique.

3. Enrouleur de ceinture selon l'une des revendications précédentes, **caractérisé en ce que** l'autre élément de limitation de force (26') est disposé à l'extérieur de la broche (14').

4. Enrouleur de ceinture selon au moins l'une des revendications précédentes, **caractérisé en ce qu'**il est prévu plusieurs autres éléments de limitation de force, qui peuvent être amenés au choix en prise avec la broche.

5. Enrouleur de ceinture selon au moins l'une des revendications précédentes, **caractérisé en ce que** le mécanisme comporte un levier à deux bras (36'), sur l'extrémité desquels est monté respectivement une roue dentée (32', 34').

6. Enrouleur de ceinture selon au moins l'une des revendications précédentes, **caractérisé en ce que** le premier et/ou l'autre élément de limitation de force (16, 26') est une barre de torsion.
